# EUROPÄISCHE PATENTSCHRIFT

(11) **EP 4 090 573 B1**
(45) Veröffentlichungstag und Bekanntmachung des Hinweises auf die Patenterteilung: **07.10.2026**
(21) Anmeldenummer: 21711759.7
(22) Anmeldetag: 01.03.2021
(51) Int. Cl.: B61L 15/00, G06F 11/16

(54) **VERFAHREN UND SYSTEM ZUR DATENVERWALTUNG IN EINEM TRANSPORTMITTEL**
METHOD AND SYSTEM FOR DATA MANAGEMENT IN A TRANSPORT MEANS
PROCÉDÉ ET SYSTÈME DE GESTION DE DONNÉES DANS UN MOYEN DE TRANSPORT

(30) Priorität: 30.03.2020 DE 102020204095
(43) Veröffentlichungstag der Anmeldung: 23.11.2022
(73) Patentinhaber: Siemens Mobility GmbH, 80997 München (DE)
(72) Erfinder: LÖHR, Jürgen, 91220 Schnaittach (DE); ERSCH, Florian, Plainsboro, NJ 08536 (US); KIRSCH, Andreas, 91334 Hemhofen (DE)
(74) Vertreter: Siemens Patent Attorneys
(86) Internationale Anmeldenummer: PCT/EP2021/054961
(87) Internationale Veröffentlichungsnummer: WO 2021/197723

(56) Entgegenhaltungen:
- CN-A- 107 187 465
- DE-A1- 102008 004 206
- DE-A1- 102014 206 078

## Beschreibung

Die vorliegende Erfindung betrifft ein Verfahren und ein System zur Datenverwaltung in einem Transportmittel, insbesondere in einem Zug, sowie ein Transportmittel mit einem solchen System.

Funktionen bzw. Komponenten von Transportmitteln wie zum Beispiel Zügen werden in der Regel von, üblicherweise dezentralen, auch als Automatisierungsgerät bezeichneten Steuerungsvorrichtungen gesteuert. Um die Funktionalität der Komponenten bzw. des Transportmittels auch im Falle eines Ausfalls, z. B. bei einem Defekt, einer solchen Steuerungsvorrichtung sicherstellen zu können, sind diese Steuerungsvorrichtungen für gewöhnlich redundant ausgebildet, d. h. in wenigstens zweifacher Ausführung vorgesehen. Eine der Steuerungsvorrichtungen arbeitet dabei als sogenannter Master, während die andere als sogenannter Slave bzw. im Stand-by betrieben wird.

Zum Steuern der Transportmittelfunktionen bzw. -komponenten, etwa von Türen, Beleuchtung, Klimatisierung und/oder dergleichen, werden von der als Master arbeitenden Steuerungsvorrichtung Steuerungsdaten erzeugt. Um einen reibungslosen Betrieb des Transportmittels zu ermöglichen, ist es bekannt, diese erzeugten Steuerungsdaten kontinuierlich und vorzugsweise dauerhaft in einer Sicherungsvorrichtung, und zwar üblicherweise - wenn auch nicht zwingend - zentral, zu speichern. In diesem Zusammenhang spricht man auch von einer Persistierung dieser Daten. So kann im Falle eines plötzlichen Ausfalls der Master-Steuerungsvorrichtung die bislang im Stand-by betriebene Steuerungsvorrichtung die Steuerung auf Grundlage der gespeicherten Steuerungsdaten nahtlos weiterführen. Auch im Falle eines Neustarts bzw. "Resets" der Master-Steuerungsvorrichtung, etwa nach einer Wartung, Reparatur oder einem Austausch derselben, kann auf die gespeicherten Steuerungsdaten zurückgegriffen werden, um ein konsistentes Weiterarbeiten zu ermöglichen.

Das Dokument CN 107 187 465 A beschreibt einen automatischen Zugfahrbetrieb mit redundant ausgelegten Steuereinheiten.

Es ist eine Aufgabe der vorliegenden Erfindung, die Verwaltung von Daten in einem Transportmittel, insbesondere einem Zug, weiter zu verbessern, insbesondere die Sicherheit und/oder die Zuverlässigkeit bei der Verwaltung dieser Daten zu erhöhen. Diese Aufgabe wird gelöst durch ein Verfahren und ein System zur Datenverwaltung in einem Transportmittel, insbesondere einem Zug, sowie einem Transportmittel mit solch einem System gemäß den unabhängigen Ansprüchen.

Das erfindungsgemäße Verfahren ist durch die Merkmale des unabhängigen Anspruchs 1 definiert.

Eine Steuerungsvorrichtung im Sinne der Erfindung ist vorzugsweise eine, insbesondere dezentrale, Vorrichtung zur Steuerung von Funktionen bzw. Komponenten eines Transportmittels. Die Steuerungsvorrichtung kann insbesondere Transportmittelkomponenten und/oder -funktionen steuern, z. B. das Öffnen und Schließen von Türen, die Beleuchtung, die Klimatisierung und/oder dergleichen. Alternativ oder zusätzlich kann die Steuerungsvorrichtung auch Betriebsparameter der Komponenten bzw. des Transportmittels erfassen und gegebenenfalls zum Zwecke der Steuerung weiterverarbeiten, zum Beispiel einen gegenwärtigen Öffnungszustand einer Tür, ein gegenwärtiges Beleuchtungsszenario, eine gegenwärtige Reisegeschwindigkeit, einen gegenwärtigen Kilometerstand und/oder dergleichen. Zu diesem Zweck weist die Steuerungsvorrichtung vorzugsweise ein Rechenmittel, z. B. einen Prozessor, und/oder ein Speichermittel, z. B. einen Flash-Speicher, auf. Das Speichermittel kann dabei auch dazu eingerichtet sein, den ersten Zählwert zu speichern.

Eine Sicherungsvorrichtung im Sinne der Erfindung ist vorzugsweise eine, insbesondere zentrale, Vorrichtung zur, insbesondere dauerhaften, Sicherung von Steuerungsdaten, die von einer Steuerungsvorrichtung zum Beispiel zur Steuerung einer Komponente bereitgestellt werden. Zu diesem Zweck kann die Sicherungsvorrichtung ein Speichermittel aufweisen, welches vorzugsweise dazu eingerichtet ist, einen Kontrollzählwert und/oder an die Sicherungsvorrichtung übermittelte Steuerungsdaten zu speichern. Die Sicherungsvorrichtung ist in bevorzugter Weise als zentraler (Transportmittel-)Server ausgebildet, der mit mehreren Steuerungsvorrichtungen z. B. in einem Netzwerk, etwa über ein Bussystem, verbunden ist.

Ein Zählwert im Sinne der Erfindung ist vorzugsweise ein Maß für eine Betriebsdauer einer Steuerungsvorrichtung, zum Beispiel eine seit Initialisierung der Steuerungsvorrichtung verstrichene Zeitdauer. Mit anderen Worten entspricht der Zählwert vorzugsweise einem Zählerstand. Der Zählwert kann insbesondere einen Betriebszeitpunkt angeben. Ist oder wird der Zählwert mit Steuerungsdaten verknüpft, kann der Zählwert ein Maß für die Aktualität dieser Steuerungsdaten darstellen. Eine Übernahme von Steuerungsdaten im Sinne der Erfindung ist vorzugsweise ein Verwenden dieser Steuerungsdaten. Beispielsweise können übernommene Steuerungsdaten einer Datenverarbeitung, insbesondere der Erzeugung aktueller Steuerungsdaten, zugrunde gelegt werden. Übernommene Steuerungsdaten können insbesondere einer Initialisierung einer Steuerungsvorrichtung zugrunde gelegt werden. Beispielsweise kann eine Steuerungsvorrichtung auf Grundlage der oder ausgehend von den übernommenen Steuerungsdaten eine Steuerungsaufgabe durchführen.

Die Erfindung basiert auf dem Ansatz, zur Erkennung der Aktualität von Steuerungsdaten, die von einer Steuerungsvorrichtung erzeugt und auf eine Sicherungsvorrichtung, vorzugsweise dauerhaft, gespeichert sind oder werden, Zählwerte mit den gespeicherten Steuerungsdaten zu verknüpfen und bei Bedarf, zum Beispiel nach Neustart einer Steuerungsvorrichtung etwa aufgrund eines Ausfalls oder Umschaltens in einen Master-Betrieb, miteinander zu vergleichen. Ein solcher Zählwert kann beispielsweise mithilfe eines Zählers der Steuerungsvorrichtung erzeugt werden.

Dabei kann insbesondere ein mit den Steuerungsdaten verknüpfter Kontrollzählwert mit einem aktuell erzeugten Zählwert der Steuerungsvorrichtung verglichen werden. Durch diesen Vergleich wird vorzugsweise ermittelt, ob die in der Sicherungsvorrichtung gespeicherten Daten noch aktuell oder bereits veraltet sind. Dementsprechend kann entschieden werden, ob die in der Sicherungsvorrichtung gespeicherten Steuerungsdaten, z. B. zur Initialisierung der Steuerungsvorrichtung, übernommen werden sollen. Mit anderen Worten kann erkannt werden, wann die in der Sicherungsvorrichtung gespeicherten Steuerungsdaten zuletzt aktualisiert wurden.

Um zu berücksichtigen, dass Steuerungsvorrichtungen üblicherweise redundant ausgeführt sind, werden vor dem (zweiten) Vergleich mit dem Kontrollzählwert die jeweils in den zwei Steuerungsvorrichtungen gespeicherten Zählwerte zunächst in einem ersten Vergleich miteinander verglichen. Auf Grundlage eines Ergebnisses dieses ersten Vergleichs kann dann einer der beiden Zählwerte im Rahmen des zweiten Vergleichs ausgewählt und mit dem Kontrollzählwert verglichen werden. Dadurch kann sichergestellt werden, dass der Kontrollzählwert mit dem aktuell gültigen Zählwert, z. B. auch im Falle eines zwischenzeitlichen Ausfalls einer der beiden Steuerungsvorrichtungen, verglichen wird. Dies kann das Vertrauen in das Ergebnis des zweiten Vergleichs erhöhen.

Die Verknüpfung des Kontrollzählwerts mit den in der Sicherungsvorrichtung gespeicherten Steuerungsdaten kann somit die Überprüfung der Konsistenz der Steuerungsdaten (im Sinne der Aktualität) ermöglichen oder zumindest erleichtern. Eine Verknüpfung des Kontrollzählwerts mit den Steuerungsdaten kann zum Beispiel erreicht werden, indem der Kontrollzählwert ein Bestandteil dieser Daten ist bzw. zu einem solchen Bestandteil gemacht wird. Es ist insbesondere denkbar, den Zählwert als sogenannte Metadaten in die Steuerungsdaten zu integrieren, zum Beispiel in einen Header zu schreiben und/oder dergleichen. Alternativ ist es aber auch denkbar, dass der Kontrollzählwert separat mit einer Referenz zu den entsprechenden Steuerungsdaten in einer Datenbank der Sicherungsvorrichtung gespeichert ist oder wird.

Es kann somit beispielsweise sichergestellt werden, dass beim Neustart einer Steuerungsvorrichtung keine veralteten Prozessdaten verwendet werden, um den Prozess, z. B. die Steuerung eines Transportmittels, zu beeinflussen. Anders gesagt kann zum Beispiel vermieden werden, dass (veraltete) Steuerungsdaten zur Steuerung einer Zugtür verwendet werden, die von einem Zugführer als defekt markiert wurde. Durch den Vergleich der Zählwerte kann sichergestellt werden, dass die aktuellen Steuerungsdaten, welche einen Hinweis auf den Defekt enthalten und auf einer Steuerungsvorrichtung gespeichert wurden, verwendet werden, selbst wenn nach einem Neustart eine andere Steuerungsvorrichtung aktiv wird, die nicht "weiß", dass die Tür defekt ist.

Nachfolgend werden bevorzugte Ausführungsformen der Erfindung und deren Weiterbildungen beschrieben.

In einer bevorzugten Ausführungsform wird der erste Zählwert in der ersten Steuerungsvorrichtung inkrementell erhöht und gespeichert. Vorzugsweise wird der erhöhte erste Zählwert dann an die Sicherungsvorrichtung übermittelt, wo der erhöhte erste Zählwert als Kontrollzählwert mit den Steuerungsdaten verknüpft und gespeichert wird. Zu diesem Zweck kann die erste Steuerungsvorrichtung einen Zähler aufweisen, der den Zählwert inkrementell erhöht. Durch das Übermitteln an die Sicherungsvorrichtung kann der Kontrollzählwert aktuell gehalten werden. In einer weiteren bevorzugten Ausführungsform werden von der ersten Steuerungsvorrichtung erzeugte aktuelle Steuerungsdaten zusammen mit dem erhöhten Zählwert an die Sicherungsvorrichtung übermittelt. Vorzugsweise werden die übermittelten aktuellen Steuerungsdaten in der Sicherungsvorrichtung mit dem Zählwert, der vorzugsweise den Kontrollzählwert bildet, verknüpft und gespeichert. Dadurch kann sichergestellt werden, dass den Steuerungsdaten immer der korrekte Zählwert bzw. Kontrollzählwert zugeordnet ist.

Dabei ist denkbar, dass der erhöhte Zählwert als Bestandteil der Steuerungsdaten an die Sicherungsvorrichtung übermittelt wird. Der Zählwert kann zum Beispiel Metadaten der Steuerungsdaten bilden bzw. als solche Metadaten in die Steuerungsdaten geschrieben werden bzw. sein. Dies vereinfacht die Verknüpfung von Kontrollzählwert und Steuerungsdaten in der Sicherungsvorrichtung, die dann nämlich einfach dadurch erreicht werden kann, dass die Steuerungsdaten gespeichert werden.

In einer weiteren bevorzugten Ausführungsform wird der erste Zählwert in der ersten Steuerungsvorrichtung inkrementell erhöht und gespeichert und an die zweite Steuerungsvorrichtung übermittelt. Vorzugsweise wird der erhöhte erste Zählwert in der zweiten Steuerungsvorrichtung als zweiter Zählwert gespeichert. Dadurch kann sichergestellt werden, dass die Steuerungsfunktion von der zweiten Steuerungsvorrichtung nahtlos übernommen werden kann, zum Beispiel wenn die erste Steuerungsvorrichtung aufgrund eines Defekts ausfällt oder zu Wartungs- bzw. Reparaturzwecken außer Betrieb genommen wird. Insbesondere kann vermieden werden, dass der zweite Zählwert und der Kontrollzählwert inkonsistent sind bzw. werden.

In einer weiteren bevorzugten Ausführungsform wird dem zweiten Vergleich derjenige Zählwert zugrunde gelegt, der größer ist. Denn der größere Zählwert kann potenziell dem längeren fehlerfreien Betrieb entsprechen. Insbesondere kann so vermieden werden, dass bei einer Wiederaufnahme des Betriebs einer Steuerungsvorrichtung ein zurückgesetzter damit inkonsistenter Zählwert mit dem Kontrollzählwert verglichen wird. Dies ermöglicht den reibungslosen Betrieb des Transportmittels bzw. seiner Komponenten.

In einer weiteren bevorzugten Ausführungsform wird bzw. werden der erste und/oder der zweite Vergleich durchgeführt, wenn eine vorgegebene Betriebssituation vorliegt. Eine vorgegebene Betriebssituation kann in diesem Zusammenhang beispielsweise einer (Wieder-)Inbetriebnahme bzw. einem Neuanlauf einer Steuerungsvorrichtung, zum Beispiel nach einem Defekt oder einer Wartung bzw. Reparatur, entsprechen. Alternativ oder zusätzlich kann eine (andere) vorgegebene Betriebssituation bei einem Wechsel des Betriebsmodus von Stand-by zu Master und/oder andersherum vorliegen. In einer solchen Betriebssituation bzw. nach dem Feststellen einer solchen vorgegebenen Betriebssituation kann, in Abhängigkeit eines Ergebnisses des zweiten Vergleichs, die Gültigkeit der in der Sicherungsvorrichtung gespeicherten Steuerungsdaten signalisiert werden.

In einer weiteren bevorzugten Ausführungsform wird ein dem zweiten Vergleich zugrunde zu legender Zählwert in Abhängigkeit eines Ergebnisses einer Prüfung, ob in der ersten und/oder zweiten Steuerungsvorrichtung ein Zählwert gespeichert ist, ausgewählt, und zwar vorzugsweise aus dem ersten und zweiten Zählwert. Ist beispielsweise nach einem Reset bzw. Neuanlauf der ersten Steuerungsvorrichtung kein erster Zählwert mehr in der ersten Steuerungsvorrichtung gespeichert, kann der in der zweiten Steuerungsvorrichtung gespeicherte zweite Zählwert mit dem Kontrollzählwert verglichen werden. Wird dagegen festgestellt, dass in der zweiten Steuerungsvorrichtung kein zweiter Zählwert gespeichert ist, kann der in der ersten Steuerungsvorrichtung gespeicherte Zählwert mit dem Kontrollzählwert verglichen werden. Die Prüfung, ob ein erster und/oder zweiter Zählwert vorhanden ist, ermöglicht somit eine fehlerfreie Datenverwaltung.

In einer weiteren bevorzugten Ausführungsform wird beim zweiten Vergleich geprüft, ob eine Differenz zwischen den Zählwerten einen vorgegebenen Differenzschwellenwert erreicht oder überschreitet. Erreicht oder überschreitet die Referenz zwischen dem Kontrollzählwert und dem ersten Zählwert bzw. dem zweiten Zählwert den vorgegebenen Differenzschwellenwert, kann dies ein Hinweis darauf sein, dass die in der Sicherungsvorrichtung gespeicherten Steuerungsdaten inkonsistent, d.h. ungültig weil nicht aktuell, sind. In diesem Fall erfolgt vorzugsweise eine entsprechende Fehlerreaktion, z. B. das Einleiten eines Registrierlaufs. Dadurch kann das Auftreten von Fehlern in der Steuerung von Komponenten und/oder Funktionen des Transportmittels vermieden oder zumindest die Häufigkeit des Auftretens von Steuerfehlern verringert werden. Alternativ oder zusätzlich können die Steuerungsvorrichtungen in den zyklischen Normalbetrieb übergehen, d. h. zum Beispiel den ersten Zählwert zyklisch erhöhen und, gegebenenfalls gemeinsam mit den Steuerungsdaten, an die Sicherungsvorrichtung übermitteln, um die Auswirkungen einer Inkonsistenz zwischen den Zählwerten möglichst gering zu halten.

In einer weiteren bevorzugten Ausführungsform wird ein Fehlersignal erzeugt, wenn die Differenz zwischen den beiden Zählerständen den vorgegebenen Differenzschwellenwert erreicht oder überschreitet. Auf Grundlage dieses Fehlersignals kann zum Beispiel eine Fehlerreaktion eingeleitet, etwa ein Registrierlauf zumindest einer der Steuerungsvorrichtungen gestartet, werden.

In einer weiteren bevorzugten Ausführungsform wird der erste Zählwert in der ersten Steuerungsvorrichtung in einem vorgegebenen Zeitintervall zyklisch erhöht. Mit anderen Worten kann der erste Zählwert in der ersten Steuerungsvorrichtung regelmäßig erhöht und gegebenenfalls, zum Beispiel in einem Speichermittel der ersten Steuerungsvorrichtung, z. B. einem Flash-Speicher, gespeichert werden. Dies ermöglicht eine besonders zuverlässige Überprüfung der Aktualität der in der Sicherungsvorrichtung gespeicherten Steuerungsdaten.

Das vorgegebene Zeitintervall kann dabei eine Länge zwischen 1 Millisekunde und 1 Stunde, vorzugsweise zwischen 1 Sekunde und 10 Minuten, insbesondere von etwa 30 Sekunden, aufweisen. Dadurch wird ermöglicht, dass aktuell erzeugte Steuerungsdaten nahezu immer oder zumindest mit hoher Wahrscheinlichkeit ein aktueller Zählwert zugeordnet werden kann.

In einer weiteren bevorzugten Ausführungsform wird beim Speichern und/oder beim Übermitteln des ersten Zählwerts, zum Beispiel an die zweite Steuerungsvorrichtung und/oder an die Sicherungsvorrichtung, eine Prüfsumme des ersten Zählerstands ermittelt und überprüft. Die Prüfsumme kann zum Beispiel eine CRC32 Prüfsumme sein. Sollten Verfälschungen der Zählwerte auftreten, z. B. durch eine Übermittlung, können diese anhand der Überprüfung der Prüfsumme erkannt werden.

Das erfindungsgemäße System ist durch die Merkmale des unabhängigen Anspruchs 12 definiert.

Dabei weist die erste und/oder zweite Steuerungsvorrichtung vorzugsweise einen Zähler auf, der dazu eingerichtet ist, den ersten bzw. zweiten Zählwert zu erzeugen, insbesondere inkrementell zu erhöhen, d. h. hochzuzählen. Beispielsweise kann die erste Steuerungseinrichtung ein Softwaremodul aufweisen, das den ersten Zählwert zyklisch erzeugen und diesen, vorzugsweise unter Zuhilfenahme vorhandener Basisdienste, zum Beispiel über ein Netzwerk wie etwa ein Bussystem, an die Sicherungsvorrichtung und/oder die zweite Steuerungsvorrichtung übermitteln kann.

Dabei kann das Softwaremodul auch dazu eingerichtet sein, den in der Sicherungsvorrichtung gespeicherten Kontrollzählwert anzufordern und mit dem lokal gespeicherten ersten Zählwert zu vergleichen. Das Softwaremodul kann dann die Gültigkeit der Steuerungsdaten, zum Beispiel mithilfe eines entsprechenden Ausgabesignals, signalisieren.

Das erfindungsgemäße Transportmittel ist durch die Merkmale des unabhängigen Anspruchs 13 definiert.

Die voranstehend beschriebenen Eigenschaften, Merkmale und Vorteile der Erfindung sowie die Art und Weise, wie diese erreicht werden, werden im Zusammenhang mit den Figuren in der folgenden Beschreibung von Ausführungsbeispielen der Erfindung näher erläutert. In den Figuren werden durchgängig dieselben Bezugszeichen für dieselben oder einander entsprechende Elemente der Erfindung verwendet. Die Ausführungsbeispiele dienen der Erläuterung der Erfindung und beschränken die Erfindung nicht auf die darin angegebenen Kombinationen von Merkmalen, auch nicht in Bezug auf funktionale Merkmale.

Es zeigen, zumindest teilweise schematisch:
- FIG 1: ein Beispiel eines Transportmittels mit einem System zur Datenverarbeitung; und
- FIG 2: ein Beispiel eines Verfahrens zur Datenverwaltung in einem Transportmittel.

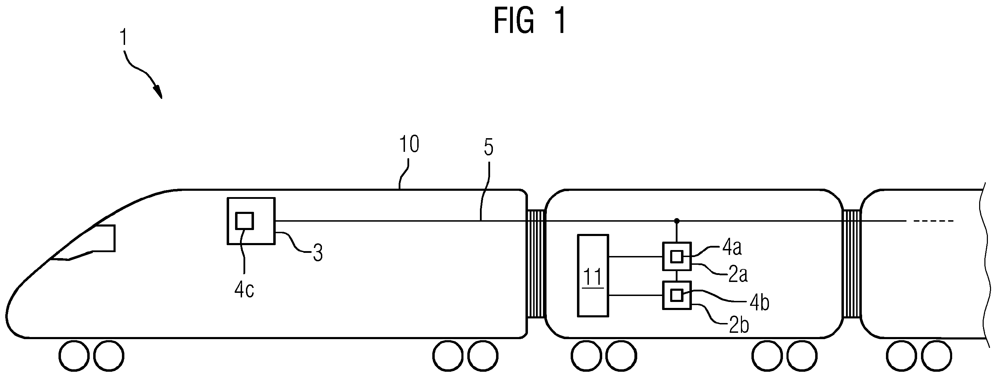

**FIG 1** zeigt ein Beispiel eines Transportmittels 10 mit einem System 1 zur Datenverarbeitung. Das System 1 weist eine erste dezentrale Steuerungsvorrichtung 2a, eine zweite dezentrale Steuerungsvorrichtung 2b sowie eine zentrale Sicherungsvorrichtung 3 auf und ist dazu eingerichtet, in einem ersten Vergleich einen in der ersten Steuerungsvorrichtung 2a gespeicherten Zählwert mit einem in der zweiten Steuerungsvorrichtung 2b gespeicherten Zählwert zu vergleichen und in Abhängigkeit eines Ergebnisses des ersten Vergleichs den ersten oder zweiten Zählwert in einem zweiten Vergleich mit einem in der Sicherungsvorrichtung 3 gespeicherten Kontrollzählwert zu vergleichen. Sowohl die erste als auch die zweite Steuerungsvorrichtung 2a, 2b ist zudem dazu eingerichtet, in Abhängigkeit eines Ergebnisses des zweiten Vergleichs in der Sicherungsvorrichtung 3 gespeicherte Steuerungsdaten, die mit dem Kontrollzählwert verknüpft sind, zu übernehmen.

Das Transportmittel 10 ist im vorliegenden Beispiel als Zug ausgebildet, der über ein (internes) Netzwerk 5 z. B. in Form eines Bussystems verfügt. Die zentrale Sicherungsvorrichtung 3 ist über dieses Netzwerk 5 mit den dezentralen, z. B. in einem Waggon des Zugs angeordneten Steuerungsvorrichtungen 2a, 2b verbunden.

Bei der Sicherungsvorrichtung 3 handelt es sich im vorliegenden Beispiel um einen zentralen (Zug-)Server, der die Steuerung von Komponenten des Transportmittels 10, etwa von Türen 11, der Beleuchtung, der Klimatisierung und/oder dergleichen, durch Steuerungsvorrichtungen wie die erste und zweite Steuerungsvorrichtung 2a, 2b koordinieren kann. Die Steuerungsvorrichtungen 2a, 2b sind dazu eingerichtet, Steuerungsdaten zur Steuerung der jeweils mit ihnen verbundenen Komponente(n) zu erzeugen. Im gezeigten Beispiel sind die Steuerungsvorrichtungen 2a, 2b mit einer Tür 11 verbunden.

Zum Zwecke der Komponentensteuerung können die Steuerungsvorrichtungen 2a, 2b gegebenenfalls auch dazu eingerichtet sein, Sensordaten aufzunehmen, etwa über das Netzwerk 5, und zu verarbeiten. Die Steuerungsvorrichtungen 2a, 2b werden auch als Automatisierungsgeräte bezeichnet.

Um die Funktionsfähigkeit der Komponenten wie zum Beispiel der Tür 11 kontinuierlich sicherstellen zu können, sind die Steuerungsvorrichtungen 2a, 2b redundant ausgebildet, wobei eine der beiden Steuerungsvorrichtungen 2a, 2b als Master und die andere im Stand-by arbeitet. Fällt beispielsweise die als Master arbeitende zweite Steuerungsvorrichtung 2b aus, kann die bis zu diesem Zeitpunkt im Stand-by betriebene erste Steuerungsvorrichtung 2a einspringen und die Steuerung der Tür 11 übernehmen.

Das System 1 ist vorzugsweise dazu eingerichtet, im Normalbetrieb zumindest die aktuellen Steuerungsdaten, zum Beispiel das aktuelle Stellsignal für einen Türaktuator, zu speichern. Speichermittel 4a, 4b der ersten und zweiten Steuerungsvorrichtung 2a, 2b weisen dazu aber in der Regel nicht den nötigen Speicherplatz auf und/oder sind auch nicht zur dauerhaften Speicherung von Daten eingerichtet. Bei den Speichermitteln 4a, 4b kann es sich zum Beispiel um Flash-Speicher handeln, sodass auf ihnen gespeicherte Daten verloren gehen, wenn die entsprechende Steuerungsvorrichtung 2a, 2b, etwa durch einen Defekt oder bei einem Herunterfahren, stromlos wird.

Daher können die zur Steuerung der Tür 11 erzeugten Steuerungsdaten von der als Master betriebenen Steuerungsvorrichtung 2a, 2b über das Netzwerk 5 an die Sicherungsvorrichtung 3 übermittelt und in einem Speichermittel 4c der Sicherungsvorrichtung 3 vorzugsweise dauerhaft gespeichert werden. Im Fall des (Neu-)Anlaufs einer der Steuerungsvorrichtungen 2a, 2b als Master bzw. der Übernahme der Master-Funktion kann die entsprechende Steuerungsvorrichtung 2a, 2b dann über das Netzwerk 5 auf die in der Sicherungsvorrichtung 3 gespeicherten Steuerungsdaten zugreifen. Im Folgenden wird rein beispielhaft zur Vereinfachung angenommen, dass die erste Steuerungsvorrichtung 2a als Master betrieben wird.

Um bei einem Anlaufen der ersten Steuerungsvorrichtung 2a z. B. bei der Übernahme der Master-Funktion von der zweiten Steuerungsvorrichtung 2b, aber auch nachdem die erste Steuerungsvorrichtung 2a zur Reperatur und/oder zum Zwecke des Austauschs stromlos gesetzt und (als Master) neu gestartet wurde, eine nahtlose Fortführung der Steuerung der Tür 11 zu ermöglichen, kann die erste Steuerungsvorrichtung 2a dazu eingerichtet sein, zunächst den ersten Vergleich durchzuführen und in Abhängigkeit eines Ergebnisses des ersten Vergleichs den zum Beispiel im Speichermittel 4a der ersten Steuerungsvorrichtung 2a gespeicherten Zählwert oder den zum Beispiel im Speichermittel 4b der zweiten Steuerungsvorrichtung 2b gespeicherten Zählwert auszuwählen. Mithilfe des ausgewählten Zählwerts kann die erste Sicherungsvorrichtung 2a dann den zweiten Vergleich durchführen und gegebenenfalls die in der Sicherungsvorrichtung 3 gespeicherten Steuerungsdaten übernehmen.

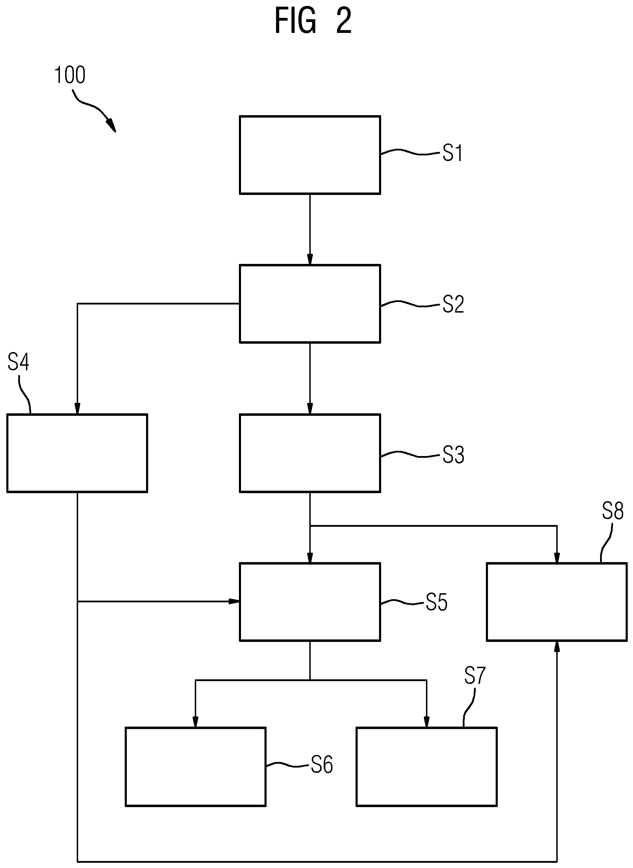

Im Folgenden wird im Zusammenhang mit FIG 2 erläutert, wie der erste und/oder der zweite Vergleich ablaufen.

**FIG 2** zeigt ein Beispiel eines Verfahrens 100 zur Datenverarbeitung in einem Transportmittel, insbesondere in einem Zug.

Läuft eine redundant ausgebildete Steuerungsvorrichtung, die zum Beispiel zur Steuerung einer Transportmittelkomponente ausgebildet ist, als Master an, kann die Steuerungsvorrichtung aktuelle, zuvor in einer Sicherungsvorrichtung gespeicherte Steuerungsdaten übernehmen, um einen reibungslosen (Weiter-) Betrieb der Transportmittelkomponente zu ermöglichen. Die als Master anlaufende Steuerungsvorrichtung wird im Folgenden rein beispielhaft als erste Steuerungsvorrichtung bezeichnet. Die Redundanz wird durch das Vorsehen einer identischen zweiten Steuerungsvorrichtung erreicht.

In einem Verfahrensschritt S1 führt die erste Steuerungsvorrichtung einen ersten Vergleich zwischen einem ersten Zählwert, der in der ersten Steuerungsvorrichtung gespeichert ist, und einem zweiten Zählwert, der in der zweiten Steuerungsvorrichtung gespeichert ist, durch. Bei den Zählwerten handelt es sich vorzugsweise um das Erzeugnis eines Zählers der ersten oder zweiten Steuerungsvorrichtung, der im Normalbetrieb Zählwerte erzeugt bzw. ausgibt.

Im Rahmen des ersten Vergleichs kann die erste Steuerungsvorrichtung insbesondere prüfen, welcher der beiden Zählwerte größer ist. Läuft die erste Steuerungsvorrichtung zum Beispiel an, nachdem sie etwa zum Zwecke einer Reparatur stromlos gesetzt wurde, kann der zweite Zählwert größer sein als der erste Zählwert, da die erste Steuerungsvorrichtung zeitweise außer Betrieb war. Hat dagegen die erste Steuerungsvorrichtung die Steuerung der Transportmittelkomponente von der zweiten Steuerungsvorrichtung übernommen, da die zweite Steuerungskomponente aufgrund eines Defekts ausgefallen ist, kann der erste Zählwert größer sein als der zweite Zählwert.

In Abhängigkeit eines Ergebnisses des ersten Vergleichs wählt die erste Steuerungsvorrichtung in einem weiteren Verfahrensschritt S2 vorzugsweise einen der beiden Zählwerte, insbesondere den größeren der beiden Zählwerte, aus. Sind beide Zählwerte gleichgroß, spielt es keine Rolle, welcher der Zählwerte ausgewählt wird. Die erste Steuerungsvorrichtung kann in diesem Fall beispielsweise den ersten Zählwert auswählen.

Nach dem Auswählen eines der beiden Zählwerte wird, ebenfalls im Verfahrensschritt S2, ein zweiter Vergleich zwischen dem ausgewählten Zählwert und einem in der Sicherungsvorrichtung gespeicherten Kontrollzählwert durchgeführt. Insbesondere kann hierbei geprüft werden, ob der ausgewählte Zählwert und der Kontrollzählwert zumindest im Wesentlichen übereinstimmen bzw. ob eine Differenz zwischen dem ausgewählten Zählwert und dem Kontrollzählwert einen vorgegebenen Differenzschwellenwert erreicht oder überschreitet.

Die erste Steuerungsvorrichtung ist dabei vorzugsweise dazu eingerichtet, den Kontrollzählwert über ein Netzwerk, etwa ein Bussystem des Transportmittels, von der Sicherungsvorrichtung anzufordern und mit dem ausgewählten Zählwert zu vergleichen.

In Abhängigkeit eines Ergebnisses des zweiten Vergleichs kann die erste Steuerungsvorrichtung dann in einem weiteren Verfahrensschritt S3 die in der Sicherungsvorrichtung gespeicherten, mit dem Kontrollzählwert verknüpften Steuerungsdaten übernehmen. Erreicht oder überschreitet die Differenz zwischen dem ausgewählten Zählwert und dem Kontrollzählwert den vorgegebenen Differenzschwellenwert nicht, d. h. stimmen der ausgewählte Zählwert und der Kontrollzählwert im Wesentlichen überein, ist dies ein Signal dafür, dass die in der Sicherungsvorrichtung gespeicherten Steuerungsdaten aktuell bzw. gültig sind. In diesem Fall können sie übernommen werden und z. B. der Fortführung der Steuerung einer Transportmittelkomponente zugrunde gelegt werden.

Andernfalls kann, zum Beispiel in einem weiteren Verfahrensschritt S4, ein Fehlersignal ausgegeben werden. Auf Grundlage des Fehlersignals wird vorzugsweise eine Fehlerreaktion eingeleitet, zum Beispiel ein Registrierlauf der ersten Steuerungsvorrichtung gestartet.

Im Anschluss an Verfahrensschritt S3 bzw. S4 geht die erste Steuerungsvorrichtung vorzugsweise in den Normalbetrieb über, wobei der erste Zählwert von der ersten Steuerungsvorrichtung in einem weiteren Verfahrensschritt S5 vorzugsweise zyklisch inkrementell erhöht und gespeichert wird. Zudem wird der erhöhte Zählwert in einem weiteren Verfahrensschritt S6 an die zweite Steuerungsvorrichtung übermittelt und dort gespeichert. Dadurch kann in Zukunft, falls die erste oder die zweite Steuerungsvorrichtung als Master anlaufen sollte, erneut der erste Vergleich in Verfahrensschritt S1 durchgeführt werden.

Zudem kann in einem weiteren, zum Verfahrensschritt S6 parallelen Verfahrensschritt S7 der erhöhte Zählwert auch an die Sicherungsvorrichtung übermittelt und dort als (aktueller) Kontrollzählwert gespeichert werden. In der Sicherungsvorrichtung wird der aktuelle Kontrollzählwert dabei vorzugsweise auch mit aktuellen Steuerungsdaten verknüpft. Dadurch kann in Zukunft, falls die erste oder die zweite Steuerungsvorrichtung als Master anlaufen sollte, erneut der zweite Vergleich in Verfahrensschritt S2 ausgeführt werden.

Die Steuerungsdaten werden im Normalbetrieb in einem zum Verfahrensschritt S5 parallelen Verfahrensschritt S8 ebenfalls von der ersten Steuerungsvorrichtung erzeugt und an die Sicherungsvorrichtung übermittelt und dort gespeichert. Dabei kann der erhöhte Zählwert in Verfahrensschritt S6 gegebenenfalls gemeinsam mit den aktuellen Steuerungsdaten, insbesondere als Teil der Steuerungsdaten, etwa in Form von Metadaten, an die Sicherungsvorrichtung übermittelt werden. Dadurch ergibt sich eine zuverlässige Verknüpfung des Kontrollzählwerts mit den Steuerungsdaten in der Sicherungsvorrichtung.

## Patentansprüche

1. Verfahren (100) zur Verwaltung von Steuerungsdaten, die zur Steuerung einer Komponente eines Transportmittels (10), insbesondere eines Zuges, ausgebildet sind, wobei
- in einem ersten Vergleich ein in einer ersten Steuerungsvorrichtung (2a) zur Steuerung der Komponente gespeicherter erster Zählwert mit einem in einer zweiten Steuerungsvorrichtung (2b) zur Steuerung der Komponente gespeicherten Zählwert verglichen wird (S1), **dadurch gekennzeichnet, dass**
- in einem zweiten Vergleich ein auf Grundlage eines Ergebnisses des ersten Vergleichs aus dem ersten und zweiten Zählwert ausgewählter Zählwert mit einem in einer Sicherungsvorrichtung (3) gespeicherten Kontrollzählwert verglichen wird (S2), und
- auf Grundlage eines Ergebnisses des zweiten Vergleichs entweder in der Sicherungsvorrichtung (3) gespeicherte, mit dem Kontrollzählwert verknüpfte Steuerungsdaten von der ersten oder zweiten Steuerungsvorrichtung (2a, 2b) übernommen werden (S3)
oder eine Fehlerreaktion eingeleitet wird.

2. Verfahren (100) nach Anspruch 1,
**dadurch gekennzeichnet ,**
**dass**
- der erste Zählwert in der ersten Steuerungsvorrichtung (2a) inkrementell erhöht und gespeichert wird (S5), und
- der erhöhte erste Zählwert an die Sicherungsvorrichtung (3) übermittelt wird, wo der erhöhte erste Zählwert als Kontrollzählwert mit den Steuerungsdaten verknüpft und gespeichert wird (S7).

3. Verfahren (100) nach Anspruch 2,
**dadurch gekennzeichnet ,**
**dass** von der ersten Steuerungsvorrichtung (2a) erzeugte aktuelle Steuerungsdaten zusammen mit dem erhöhten Zählwert, an die Sicherungsvorrichtung (3) übermittelt werden, wo die aktuellen Steuerungsdaten mit dem Zählwert verknüpft und gespeichert werden (S8).

4. Verfahren (100) nach einem der vorangehenden Ansprüche, **dadurch gekennzeichnet ,**
**dass**
- der erste Zählwert in der ersten Steuerungsvorrichtung (2a) inkrementell erhöht und gespeichert wird (S5), und
- der erhöhte erste Zählwert an die zweite Steuerungsvorrichtung (2b) übermittelt wird, wo der erhöhte erste Zählwert als zweiter Zählwert gespeichert wird (S6).

5. Verfahren (100) nach einem der vorangehenden Ansprüche, **dadurch gekennzeichnet ,**
**dass** dem zweiten Vergleich derjenige Zählwert zugrunde gelegt wird, der größer ist.

6. Verfahren (100) nach einem der vorangehenden Ansprüche, **dadurch gekennzeichnet ,**
**dass** der erste und/oder der zweite Vergleich durchgeführt wird, wenn eine vorgegebene Betriebssituation vorliegt.

7. Verfahren (100) nach einem der vorangehenden Ansprüche, **dadurch gekennzeichnet ,**
**dass** dem zweiten Vergleich ein zugrunde zu legender Zählwert in Abhängigkeit eines Ergebnisses einer Prüfung, ob in der ersten und/oder zweiten Steuerungsvorrichtung (2a, 2b) ein Zählwert gespeichert ist, ausgewählt wird.

8. Verfahren (100) nach einem der vorangehenden Ansprüche, **dadurch gekennzeichnet ,**
**dass** beim zweiten Vergleich geprüft wird, ob eine Differenz zwischen den Zählwerten einen vorgegebenen Differenzschwellenwert erreicht oder überschreitet.

9. Verfahren (100) nach Anspruch 8,
**dadurch gekennzeichnet ,**
**dass** ein Fehlersignal erzeugt wird, wenn die Differenz zwischen den beiden Zählerständen den vorgegebenen Differenzschwellenwert erreicht oder überschreitet (S4).

10. Verfahren (100) nach einem der vorangehenden Ansprüche, **dadurch gekennzeichnet ,**
**dass** der erste Zählwert in der ersten Steuerungsvorrichtung (2a) in einem vorgegebenen Zeitintervall zyklisch erhöht wird.

11. Verfahren (100) nach einem der vorangehenden Ansprüche, **dadurch gekennzeichnet ,**
**dass** beim Speichern und/oder beim Übermitteln des ersten Zählwerts eine Prüfsumme des ersten Zählerstands ermittelt und überprüft wird.

12. System (1) zur Verwaltung von Steuerungsdaten, die zur Steuerung einer Komponente eines Transportmittels (10), insbesondere eines Zuges, ausgebildet sind, mit einer ersten Steuerungsvorrichtung (2a) zur Steuerung der Komponente, einer zweiten Steuerungsvorrichtung (2b) zur Steuerung der Komponente und einer Sicherungsvorrichtung (3), wobei das System (1) dazu eingerichtet ist, in einem ersten Vergleich einen in der ersten Steuerungsvorrichtung (2a) gespeicherten Zählwert mit einem in der zweiten Steuerungsvorrichtung (2b) gespeicherten Zählwert zu vergleichen, **dadurch gekennzeichnet, dass** das System (1) weiterhin dazu eingerichtet ist, in einem zweiten Vergleich einen auf Grundlage eines Ergebnisses des ersten Vergleichs ausgewählten Zählwert mit einem in der Sicherungsvorrichtung (3) gespeicherten Kontrollzählwert zu vergleichen, und die Steuerungsvorrichtungen (2a, 2b) dazu eingerichtet sind, auf Grundlage eines Ergebnisses des zweiten Vergleichs entweder in der Sicherungsvorrichtung (3) gespeicherte, mit dem Kontrollzählwert verknüpfte Steuerungsdaten zu übernehmen oder eine Fehlerreaktion einzuleiten.

13. Transportmittel (10), insbesondere Zug, mit einem System (1) zur Verwaltung von Steuerungsdaten nach Anspruch 12.

## Claims

1. Method (100) for managing control data designed to control a component of a means of transport (10), in particular a train, wherein
- a first count stored in a first control apparatus (2a) for controlling the component is compared, in a first comparison, with a count stored in a second control apparatus (2b) for controlling the component (S1), **characterized in that**
- a count selected from the first and second counts on the basis of a result of the first comparison is compared, in a second comparison, with a check count stored in a backup apparatus (3) (S2), and
- a result of the second comparison is taken as a basis either for control data linked with the check count that are stored in the backup apparatus (3) being adopted by the first or second control apparatus (2a, 2b) (S3)
or for an error response being initiated.

2. Method (100) according to Claim 1,
**characterized**
**in that**
- the first count is incrementally increased in the first control apparatus (2a) and stored (S5), and
- the increased first count is transferred to the backup apparatus (3), and there the increased first count is linked with the control data as the check count and stored (S7).

3. Method (100) according to Claim 2,
**characterized**
**in that** current control data generated by the first control apparatus (2a) are transferred to the backup apparatus (3) together with the increased count, and there the current control data are linked with the count and stored (S8).

4. Method (100) according to one of the preceding claims, **characterized**
**in that**
- the first count is incrementally increased in the first control apparatus (2a) and stored (S5), and
- the increased first count is transferred to the second control apparatus (2b), and there the increased first count is stored as the second count (S6).

5. Method (100) according to one of the preceding claims, **characterized**
**in that** the second comparison is based on the count that is higher.

6. Method (100) according to one of the preceding claims, **characterized**
**in that** the first and/or the second comparison is performed if there is a predefined operating situation.

7. Method (100) according to one of the preceding claims, **characterized**
**in that** a count to be taken as a basis for the second comparison is selected according to a result of a check to determine whether a count is stored in the first and/or second control apparatus (2a, 2b).

8. Method (100) according to one of the preceding claims, **characterized**
**in that** the second comparison comprises checking whether a difference between the counts reaches or exceeds a predefined difference threshold.

9. Method (100) according to Claim 8,
**characterized**
**in that** an error signal is generated if the difference between the two counter readings reaches or exceeds the predefined difference threshold (S4).

10. Method (100) according to one of the preceding claims, **characterized**
**in that** the first count is cyclically increased in the first control apparatus (2a) in a predefined time interval.

11. Method (100) according to one of the preceding claims, **characterized**
**in that** the storage and/or transfer of the first count comprises ascertaining and checking a checksum of the first counter reading.

12. System (1) for managing control data designed to control a component of a means of transport (10), in particular a train, having a first control apparatus (2a) for controlling the component, a second control apparatus (2b) for controlling the component and a backup apparatus (3),
wherein the system (1) is configured to compare, in a first comparison, a count stored in the first control apparatus (2a) with a count stored in the second control apparatus (2b), **characterized in that** the system (1) is also configured to compare, in a second comparison, a count selected on the basis of a result of the first comparison with a check count stored in the backup apparatus (3), and the control apparatuses (2a, 2b) are configured to take a result of the second comparison as a basis either for adopting control data linked with the check count that are stored in the backup apparatus (3) or for initiating an error response.

13. Means of transport (10), in particular a train, having a system (1) for managing control data according to Claim 12.

## Revendications

1. Procédé (100) de gestion de données de commande, qui sont constituées pour la commande d'un composant d'un moyen (10) de transport, en particulier d'un train, dans lequel
- dans une première comparaison, on compare (S1) une première valeur numérique, mise en mémoire dans un premier dispositif (2a) de commande du composant, à une valeur numérique, mise en mémoire dans un deuxième dispositif (2b) de commande du composant, **caractérisé en ce que**
- dans une deuxième comparaison, on compare (S2) une valeur numérique, sélectionnée sur la base d'un résultat de la première comparaison parmi la première et la deuxième valeur numérique, à une valeur numérique de contrôle, mise en mémoire dans un dispositif (3) de sécurisation, et
- sur la base d'un résultat de la deuxième comparaison, ou bien des données de commande, mises en mémoire dans le dispositif (3) de sécurisation et combinées à la valeur numérique de contrôle, sont prises en charge (S3) par le premier ou le deuxième dispositif (2a, 2b) de commande,
ou bien on déclenche une réaction d'erreur.

2. Procédé (100) suivant la revendication 1,
**caractérisé**
**en ce que**
- l'on augmente par incrément la première valeur numérique dans le premier dispositif (2a) de commande et on la met en mémoire (S5), et
- on transmet la première valeur numérique augmentée au dispositif (3) de sécurisation, où on combine la première valeur numérique augmentée, comme valeur numérique de contrôle, aux données de commande et on la met en mémoire (S7).

3. Procédé (100) suivant la revendication 2,
**caractérisé**
**en ce que** l'on transmet des données de commande en cours produites par le premier dispositif (2a) de commande ensemble avec la valeur numérique augmentée au dispositif (3) de sécurisation, où les données de commande en cours sont combinées à la valeur numérique et mises en mémoire (S8).

4. Procédé (100) suivant l'une des revendications précédentes, **caractérisé**
**en ce que**
- l'on augmente par incrément la première valeur numérique dans le premier dispositif (2a) de commande et on l'y met en mémoire (S5), et
- on transmet la première valeur numérique augmentée au deuxième dispositif (2b) de commande, où on met en mémoire (S6) comme deuxième valeur numérique la première valeur numérique augmentée.

5. Procédé (100) suivant l'une des revendications précédentes, **caractérisé**
**en ce que**, est à la base de la deuxième comparaison, la valeur numérique, qui est plus grande.

6. Procédé (100) suivant l'une des revendications précédentes, **caractérisé**
**en ce que** l'on effectue la première et/ou la deuxième comparaison, s'il y a une situation de fonctionnement donnée à l'avance.

7. Procédé (100) suivant l'une des revendications précédentes, **caractérisé**
**en ce que** l'on sélectionne une valeur numérique à la base de la deuxième comparaison en fonction d'un résultat d'un contrôle sur le point de savoir, si une valeur numérique est mise en mémoire dans le premier et/ou le deuxième dispositif (2a, 2b) de commande.

8. Procédé (100) suivant l'une des revendications précédentes, **caractérisé**
**en ce que** l'on contrôle, dans la deuxième comparaison, si une différence entre les valeurs numériques atteint ou dépasse une valeur de seuil de différence donnée à l'avance.

9. Procédé (100) suivant la revendication 8,
**caractérisé**
**en ce que** l'on produit un signal d'erreur, si la différence entre les deux états de compteur atteint ou dépasse (S4) la valeur de seuil de différence donnée à l'avance.

10. Procédé (100) suivant l'une des revendications précédentes, **caractérisé**
**en ce que** l'on augmente cycliquement, dans un laps de temps donné à l'avance, la première valeur numérique dans le premier dispositif (2a) de commande.

11. Procédé (100) suivant l'une des revendications précédentes,
**caractérisé**
**en ce que**, lors de la mise en mémoire et/ou lors de la transmission de la première valeur numérique, on établit une somme de contrôle du premier état de compteur et on la contrôle.

12. Système (1) de gestion de données de commande, qui sont constituées pour la commande d'un composant d'un moyen (10) de transport, en particulier d'un train, comprenant un premier dispositif (2a) de commande du composant, un deuxième dispositif (2b) de commande du composant et un dispositif (3) de sécurisation, dans lequel
le système (1) est agencé pour, dans une première comparaison, comparer une valeur numérique, mise en mémoire dans le premier dispositif (2a) de commande, à une valeur numérique, mise en mémoire dans le deuxième dispositif (2b) de commande,
**caractérisé en ce que** le système (1) est agencé en outre pour,
dans une deuxième comparaison, comparer une valeur numérique sélectionnée sur la base d'un résultat de la première comparaison, à une valeur numérique de contrôle, mise en mémoire dans le dispositif (3) de sécurisation, et les dispositifs (2a, 2b) de commande sont agencés pour, sur la base d'un résultat de la deuxième comparaison, ou bien prendre en charge des données de commande, mises en mémoire dans le dispositif (3) de sécurisation et combinées à la valeur numérique de contrôle, ou bien déclencher une réaction d'erreur.

13. Moyen (10) de transport, en particulier train, comprenant un système (1) de gestion de données de commande suivant la revendication 12.
